Europäisches Patentamt

European Patent Office

Office européen des brevets

(19)

(11) Publication number: 0 248 561
A1

(12) **EUROPEAN PATENT APPLICATION**

(21) Application number: 87304448.1

(51) Int. Cl.4: **C08G 18/48**

(22) Date of filing: 19.05.87

(30) Priority: 05.06.86 GB 8613701

(43) Date of publication of application:
09.12.87 Bulletin 87/50

(84) Designated Contracting States:
BE DE FR GB IT NL

(71) Applicant: IMPERIAL CHEMICAL INDUSTRIES PLC
Imperial Chemical House Millbank
London SW1P 3JF(GB)

(72) Inventor: Bentley, James Martyn
Bleuckeveldlaan 14
B-1980 Tervuren(BE)
Inventor: Brown, James Peter
Stijn Streuvelslaan 9
B-1960 Sterrebeek(BE)
Inventor: Frijns, Guy
Drève des Sapins, 5
B-1330 Rixensart(BE)
Inventor: Sparrow, David John
Sterrebeeklaan 79
B-1980 Tervuren(BE)

(74) Representative: Leherte, Georges Maurice Lucien Marie et al
Imperial Chemical Industries PLC Legal Department: Patents P.O. Box 6
Welwyn Garden City Herts. AL7 1HD(GB)

(54) **Primary hydroxyl-ended polymeric polyols.**

(57) A method for the preparation of a substantially primary hydroxyl ended polymeric polyol which comprises the steps of :

1. reacting a polyether polyol having secondary hydroxyl end groups with an excess of a volatile dicarboxylic acid diester to form an end group modified polyether having substantially ester end groups;

2. removing unreacted dicarboxylic acid diester from the reaction mixture;

3. reacting the end-group modified polyether with an excess of a volatile glycol having primary hydroxyl groups to form a polymeric polyol having substantially primary hydroxyl end groups, and

4. removing unreacted glycol from the reaction mixture.

This invention relates to a process for preparing polyoxyalkylene polyols having high levels of primary hydroxyl end groups, and to their use in the manufacture of polyurethanes.

It is well known to manufacture polyurethanes, especially flexible foams, from polyoxypropylene polyols having molecular weights in the range 2000-8000. In general, the polyoxypropylene polyols are excellent starting materials having lower viscosities than polyester polyols and providing polyurethanes which are more resistant to hydrolysis. Compared with other polyethers such as polyoxyethylene polyols and polytetramethylene ether glycols, the polyoxypropylene polyols have the advantage of being liquids at ambient temperatures. Their main disadvantage, relative to other polyols, is their low reactivity towards polyisocyanates due to the predominance of secondary hydroxyl groups.

In order to replace some of the secondary hydroxyls by primary hydroxyls and thereby increase the reactivity, it is known to react polyoxypropylene polyols with ethylene oxide producing the so-called ethylene oxide-capped polyethers. This is an effective method of introducing primary hydroxyls but, because the ethylene oxide reacts preferentially with the primary hydroxyls formed in the reaction rather than with the residual secondary hydroxyls, the capped products even at ethylene oxide levels up to 20%, retain significant amounts of secondary hydroxyl groups.

It has now been found that polyoxypropylene and poly(oxyethylene-oxypropylene) polyols may be modified so as to replace substantially all of the secondary hydroxyls by primary groups by reaction with dialkyl esters of dicarboxylic acids and then with primary glycols hereinafter described.

Accordingly, the invention provides a method for the preparation of a substantially primary hydroxyl ended polymeric polyol which comprises the steps of :

1. reacting a polyether polyol having secondary hydroxyl end groups with an excess of a volatile dicarboxylic acid diester to form an end group modified polyether having substantially ester end groups;

2. removing unreacted dicarboxylic acid diester from the reaction mixture;

3. reacting the end-group modified polyether with an excess of a volatile glycol having primary hydroxyl groups to form a polymeric polyol having substantially primary hydroxyl end groups, and

4. removing unreacted glycol from the reaction mixture.

Polyether polyols which may be employed in step 1 include polyoxyalkylene polyols containing oxypropylene and optionally oxyethylene units and having 2-4 hydroxyl groups. Thus, the polyoxyalkylene polyols which may be used include the polyoxypropylene diols, triols and tetrols, and corresponding poly(oxyethylene-oxypropylene) polyols, already known in the polyurethane art. When poly(oxyethylene-oxypropylene) polyols are used, the oxyethylene and oxypropylene units may be arranged randomly or in blocks and the secondary hydroxyl end groups may constitute a minor or a major proportion of the total hydroxyls. Mixtures of polyalkylene polyols may be used.

The volatile dicarboxylic acid diester used in step 1 should be sufficiently volatile to permit it to be substantially removed from the step 1 reaction product by volitalisation under industrially practicable conditions of temperature and pressure. A preferred di-ester of is a di-lower alkyl, especially dimethyl, ester of succinic, glutaric or adipic acid. It is particularly convenient to use a commercially available mixture of dimethyl esters, for example a mixture of the dimethyl esters of succinic, glutaric and adipic acids in the approximate weight ratio 1:3:1.

The step 1 reaction between the polyether polyol and the di-ester may be performed at temperatures up to 230 deg. Celsius with removal of lower alkanol. When the reaction is complete, as indicated by the unchanging alkoxyl content, the excess di-ester is removed in step 2 using, for example, a thin wall evaporator at temperatures in the range 100-250 deg. Celsius, preferably 130-160 deg. Celsius, under reduced pressure, for example 20 mm mercury. The volatile content of the product should be less than 1% by weight, preferably less than 0.1%.

The amount of di-ester used in the reaction should be at least 1.5 m moles per mole of polyether polyol, where m is the number of hydroxyl groups in the polyether polyol and may be as high as 10 m moles, or even much higher, the excess being recovered and recycled. Similarly, the alkanol may be recovered.

The step 3 reaction between the ester terminated polyether and the glycol may be performed at temperatures up to 230 deg. Celsius, for example 130 - 160 deg. Celsius, with removal of lower alkanol. When the reaction is complete, as indicated by the evolution of lower alkanol, the excess glycol is removed in step 4 using conventional separation techniques, for example, a thin wall evaporator at temperatures in the range 100-250 deg. Celsius, preferably 130-160 deg. Celsius, under reduced pressure, for example 20 mm mercury. The volatile content of the product after stripping should be less than 1 % by weight, preferably less than 0.1 %.

The excess of glycol used in the reaction should be at least 1.5 m moles per mole of end group modified polyether, where m is the number of hydroxyl groups in the polyether and may be as high as 10 m moles, or even much higher, the excess being recovered and recycled.

Examples of glycols include ethylene glycol, N-methyldiethanolamine, diethylene glycol, 1,3-propanediol, 1,4-butanediol, 1,5-pentanediol and 1,6-hexanediol. Mixtures of glycols may be used.

The polymeric polyols obtained by the method of the invention suitably have molecular weights of from 1000 to 10000. Diols having molecular weights of 1000-4000 and triols having molecular weights of 3000 to 6000 are particularly useful in polyurethane formulations. The polyols contain substantially primary hydroxyl ester end groups.

Conventional antioxidants and/or UV stabilisers may be included in the polymeric polyols at any appropriate stage in their preparation.

The polymeric polyols prepared by the method of the invention, optionally in admixture with other polymeric polyols, for example polyether polyols, may be reacted with organic polyisocyanates to form polyurethanes which may have a cellular or non-cellular structure. Suitable polyisocyanates include aromatic diisocyanates, for example tolylene diisocyanate and diphenylmethane diisocyanate which may be used as pure compounds, for example, 4,4'-diphenylmethane diisocyanate, as isomer mixtures, for example mixtures of 4,4-and 2,4'-diphenylmethane diisocyanates, as prepolymers or as unrefined products, for example products (crude MDI) containing diphenylmethane diisocyanate isomers and oligomers.

The reaction between the polymeric polyol and the polyisocyanate may be carried out using known polyurethane techniques to produce useful products, for example cast elastomers, microcellular elastomers and flexible foams.

This invention is illustrated but not limited by the following example.

Example

A. 1538 pbw of a polypropylene glycol MW 2000 were charged to a 5L multi-necked flask fitted with a distillation (packed) column, thermocouple/temperature control instrument, stirrer and nitrogen sparge dip-leg. 2462 pbw (10 times weight excess) of dimethyl esters of adipic, glutaric, succinic acids in a weight ratio of 1:3:1 were further charged.

The mixture was heated to 205 deg. Celsius with agitation and under a nitrogen flow rate sufficient to maintain a column head temperature of 65-70 deg. Celsius. 60 ml methanol was distilled and collected over a period of 2 hrs during which time the reaction temperature was allowed to rise to 210 deg. Celsius. The flask contents were cooled to 100 deg. Celsius. This is product A.

The free dimethyl ester content of product A was then removed by distillation in a thin film evaporator, operating at +/- 20 mm Hg vacuum, 2000 pbw being collected. The distillation residue (Product B) was collected and a portion (1000 pbw) was then charged with 2200 pbw mono-ethylene glycol (40 times weight excess) to apparatus for production of Product C. The reaction temperature was taken to 190 deg. Celsius when methanol began to distill. The temperature was allowed to rise to 195 deg. Celsius with a nitrogen sparge sufficient to maintain a column head temperature of 65-70 deg. Celsius and 40 mls. Methanol was collected over 2 1/2 hours. The reaction mixture was cooled to room temperature. It was noted that two distinct layers were formed on standing; the lower layer was identified as free mono-ethylene glycol. The upper layer (Product C) contained 3.5% free mono-ethylene glycol and had a methoxyl content of 0.36% as methanol and was an almost clear pale yellow liquid. Product C was then passed through a thin film evaporator at +/-135 deg. Celsius and +/- 20 mm Hg vacuum, to remove the free ethylene glycol. The distillation residue (desired final Product D) consisted of a mixture of polyols of Formula 1.

### Claims

1. A method for the preparation of a substantially primary hydroxyl ended polymeric polyol which comprises the steps of :

1. reacting a polyether polyol having secondary hydroxyl end groups with an excess of a volatile dicarboxylic acid diester to form an end group modified polyether having substantially ester end groups;

2. removing unreacted dicarboxylic acid diester from the reaction mixture;

3. reacting the end-group modified polyether with an excess of a volatile glycol having primary hydroxyl groups to form a polymeric polyol having substantially primary hydroxyl end groups, and

4. removing unreacted glycol from the reaction mixture.

2. A method to claim 1 wherein the polyether polyol is a polyoxyalkylene polyol containing oxypropylene and optionally oxyethylene units and having 2-4 hydroxyl groups.

3. A method according to claim 1 or claim 2 wherein the dicarboxylic acid diester is a di-lower alkyl ester of succinic, glutaric or adipic acid.

4. A method according to claim 3 wherein the di-lower alkyl ester is a mixture of the dimethyl ester of succinic, glutaric and adipic acids.

5. A method according to any one of the preceding claims wherein at least 1.5 m moles of diester are reacted per mole of polyether polyol, m being the number of hydroxyl groups in the polyether.

6. A method according to claim 5 wherein at least 10 m moles of diester are reacted per mole of polyether polyol.

7. A method according to any one of the preceding claims wherein the glycol is ethylene glycol.

8. A method according to any one of the preceding claims wherein at least 1.5 m moles of glycol per mole of polyether polyol are reacted with the end groups modified polyether, m being the number of hydroxyl groups in the polyether.

9. A method according to claim 8 wherein at least 10 m mioles of glycol are reacted per mole of polyether polyol.

10. A polyurethane prepared by reacting an organic polyisocyanate with a polymeric polyol prepared by the method of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 178 562  (BAYER)<br>* Claims 1-6,13; page 6, lines 19-25; page 7, lines 23-34; page 8, lines 5-13; page 13, lines 10-14 * | 1-10 | C 08 G  18/48 |
| | --- | | |
| A | US-A-4 487 853  (REICHEL et al.)<br>* Claims 1-6 * | 1,10 | |
| | ----- | | |

|  |
|---|
| **TECHNICAL FIELDS SEARCHED (Int. Cl.4)** |
| C 08 G |

The present search report has been drawn up for all claims

| Place of search | Date of completion of the search | Examiner |
|---|---|---|
| THE HAGUE | 10-09-1987 | DECOCKER L. |